**Europäisches Patentamt**

**European Patent Office**

**Office européen des brevets**

(19)

(11) Veröffentlichungsnummer: **0 138 053**
**B1**

(12) # EUROPÄISCHE PATENTSCHRIFT

(45) Veröffentlichungstag der Patentschrift:
**07.01.88**

(51) Int. Cl.⁴: **F 16 P 1/02**

(21) Anmeldenummer: **84110812.9**

(22) Anmeldetag: **11.09.84**

(54) **Maschinengehäuse.**

(30) Priorität: **13.10.83 DE 3337218**

(43) Veröffentlichungstag der Anmeldung:
**24.04.85 Patentblatt 85/17**

(45) Bekanntmachung des Hinweises auf die Patenterteilung:
**07.01.88 Patentblatt 88/1**

(84) Benannte Vertragsstaaten:
**CH DE GB IT LI**

(56) Entgegenhaltungen:
**DD - A - 130 770**
**DE - B - 1 004 869**
**GB - A - 614 832**
**GB - A - 1 266 352**
**GB - A - 1 583 032**
**US - A - 2 038 471**
**US - A - 2 664 332**
**US - A - 2 825 242**

(73) Patentinhaber: **ROBERT BOSCH GMBH, Postfach 50, D-7000 Stuttgart 1 (DE)**

(72) Erfinder: **Berner, Erwin, Christophstrasse 31, D-7050 Waiblingen (DE)**
Erfinder: **Zettel, Hans-Dieter, Dr., Hausweinberg 44, D-7050 Waiblingen-Beinstein (DE)**

## Beschreibung

Die Erfindung betrifft ein Maschinengehäuse der im Oberbegriff des Anspruchs 1 genannten Gattung.

Für Maschinen, beispielsweise Verpackungsmaschinen, mit bewegten Werkzeugen, Fördereinrichtungen und dgl. bestehen aus Sicherheitsgründen Vorschriften, die besagen, dass die bewegten Teile von Maschinen vor dem Zugriff von Bedienungspersonen geschützt sein müssen. Solche Maschinen weisen daher Gehäuse, Verkleidungen und Abdeckungen mit festen Wandteilen, Klappen und Türen auf. In der Regel sind diese Teile bzw. deren Scharniergelenke mit dem Maschinengestell fest verschraubt. Die Montage eines solchen Gehäuses erfordert einen erheblichen Arbeitsaufwand, der insbesondere durch Anpassung der einzelnen Gehäuseteile sehr hoch ist.

Darüber hinaus ist durch die US-A-2 038 471 ein Maschinengehäuse an einem Bandförderer bekannt geworden, bei dem an einem Gestell Deckbleche mittels Klemmstücken festgeklemmt sind. Die Deckbleche haben eine waagrechte Rippe, die auf einer Rippe am Gestell aufliegt, wobei zum Festhalten der Deckbleche deren Rippe mit der Rippe am Gestell verspannt ist. Das bekannte Maschinengehäuse hat den Nachteil, dass, da die Rippen am Gestell und an den Deckblechen sowie die daran festgeklemmten Klemmstücke frei in die Umgebung abstehen, diese Teile eine Gefahr für Bedienungspersonen bilden, die bei unachtsamem Vorbeigehen daran hängenbleiben können.

Der Erfindung liegt die Aufgabe zugrunde, ein Maschinengehäuse zu schaffen, von dem keine Befestigungsteile nach aussen abstehen und das sich ohne Arbeitsaufwand für die Anpassung der Gehäuseteile sehr schnell montieren lässt. Die Lösung dieser Aufgabe wird durch die im Kennzeichen des Anspruchs 1 angeführten Massnahmen erreicht.

Das erfindungsgemässe Maschinengehäuse hat den Vorteil, dass die Montage der Wandteile in sehr kurzer Zeit und ohne spanabhebende Bearbeitung, wie Bohren, durchgeführt werden kann sowie ein Ausrichten der Wandteile zueinander leicht möglich ist. Ferner ist ein variabler Raster der Wandteile möglich, der den Bearbeitungsstationen der Maschinen angepasst werden kann.

Ein Ausführungsbeispiel der Erfindung ist in der Zeichnung dargestellt und in der nachfolgenden Beschreibung näher erläutert. Es zeigen:

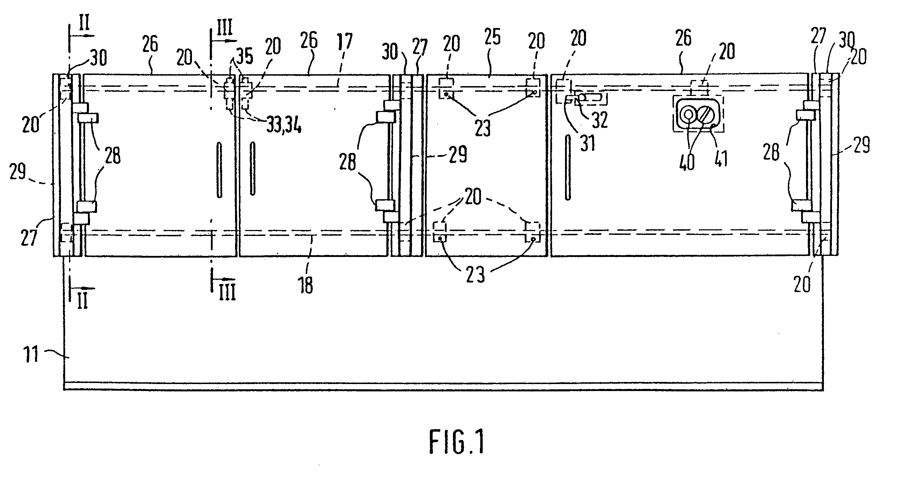

Figur 1 ein Maschinengehäuse vereinfacht in Vorderansicht,

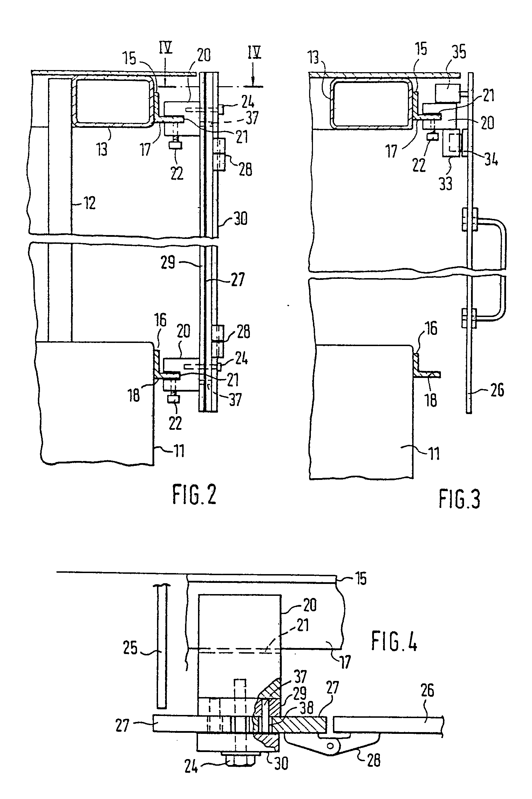

Figur 2 einen Teil des Maschinengehäuses nach Figur 1 vergrössert im Querschnitt in der Ebene II–II der Figur 1,

Figur 3 einen anderen Teil des Maschinengehäuses nach Figur 1 vergrössert im Querschnitt in der Ebene III–III der Figur 1 und

Figur 4 einen Teil des Maschinengehäuses in Draufsicht, teilweise im Schnitt in der Ebene IV–IV der Figur 2.

Eine Maschine, beispielsweise eine Verpackungsmaschine, mit bewegten Teilen wie Werkzeugen, Fördereinrichtungen und dgl. hat zum Schutz vor Zugriff ein Gehäuse mit teils ortsfesten und teils zu öffnenden Wandteilen. Diese Wandteile sind am Gestell der Maschine befestigt, das aus seinem kompakten Grundgestell 11 und einem über diesem von Säulen getragenen Rahmen 13 besteht. Seitlich am Grundgestell 11 und am Rahmen 13 sind übereinander Winkelschienen 15, 16 befestigt, derart, dass jeweils ein Schenkel 17, 18 wie eine Rippe waagerecht vom Gestell absteht. Die in Draufsicht deckungsgleichen Schenkel 17, 18 verlaufen in zwei waagerechten Ebenen, die zueinander einen bestimmten Abstand haben. Mit den freien Schenkeln 17, 18 sind Klemmstücke 20 an willkürlich ausgewählten Stellen festklemmbar. Dazu haben die klotzförmigen Klemmstücke 20 eine Nut 21, deren Weite etwas grösser ist als die Dicke der Schenkel 17, 18. In jeweils einem der die Nut 21 der Klemmstücke 20 begrenzenden Schenkel ist in einer Gewindebohrung eine Klemmschraube 22 angeordnet. Nach Aufstecken der Klemmstücke 20 mit der Nut 21 und Anziehen der Klemmschrauben 22 nehmen die Klemmstücke 20 am Maschinengestell eine feste Position ein. Mit den Klemmstücken 20 sind die einzelnen, die Gehäusewand bildenden Teile, wie Platten 25, Türen 26, Leisten 27 und dgl. verbindbar. Vorzugsweise werden diese Teile an den Klemmstücken 20 befestigt, bevor diese am Gestell montiert werden. Starr befestigte Platten 25, die Bereiche der Maschine abdecken, die keinen schnellen Zugriff erforderlich machen, werden mit den Klemmstücken 20 direkt verklebt oder mittels Befestigungsschrauben 23 verbunden.

Türen 26, welche schnell zugängliche Stellen der Maschine zugeordnet sind, sind mit Scharnieren 28 schwenkbar mit Leisten 27 verbunden. Diese Leisten 27 können wie die Platten 25 direkt an Klemmstücken 20 starr befestigt sein. Um jedoch die Türen 26 leicht einstellen zu können, sind die Leisten 27 mittels einer Deckleiste 30 an einem Steg 29 festgeklemmt. Die Stege 29 haben die gleiche Höhe wie die Platten 25, Türen 26 und Leisten 27 und sind mit den Klemmstücken 20 durch Klebung oder mittels Befestigungsschrauben verbunden. An einem Steg 29 liegen vorzugsweise jeweils zwei Leisten 27 nebeneinander mit gegenseitigem Abstand an, durch den die Deckleiste 30 durchsetzende und mit dem Steg 29 verschraubte Klemmschrauben 24 greifen. Zum leichten Montieren der Leisten 27 und der Türen 26 tragen die Stege 29 Stifte 37, an denen die Leisten 27, die entsprechend angeordneten Bohrungen 38 haben, zunächst aufgehängt und dann erst mit den Deckleisten 30 festgeklemmt werden.

Der Durchmesser der Bohrungen 38 ist grösser als der der Stifte 37.

Zum Geschlossenhalten der Türen 26 sind an gesondert angeordneten Klemmstücken 20 Rasten 31 für Riegel 32 und Magnethalter 33 für Anker 34 befestigt. Ferner sind an solchen Klemmstücken 20 auch Sicherheitsschalter 35 befestigt, welche von den Türen 26 betätigt werden, so dass beim Öffnen der Türen die Maschine sofort abgeschaltet wird. Ausserdem können an solchen Klemmstücken auch elektrische Bedienelemente, wie Steuerschalter 40 befestigt werden, die durch Aussparungen 41 in den Türen 26 oder Platten 24 zugänglich sind. Ausser den oben beschriebenen Teilen des Gehäuses können bei Bedarf auch andere Teile sicher und schnell mit den beschriebenen Klemmstücken am Gestell befestigt werden.

## Patentansprüche

1. Maschinengehäuse mit an einem Gestell befestigten Wandteilen (25, 26, 27), die mit Hilfe von U-förmigen Klemmstücken (20) an wenigstens einer horizontalen Rippe (17, 18) am Gestell (11, 13) mittels einer gegen die Rippe drückenden Klemmschraube (22) gehalten sind, dadurch gekennzeichnet, dass die Wandteile (25, 26, 27) an den Klemmstücken (20) von aussen befestigt sind, dass die Klemmstücke (20) eine die Rippe (17, 18) aufnehmende Nut (21) aufweisen und nur an der Rippe festgeklemmt sind und dass die Rippe (17, 18) Teil einer am Gestell (11, 13) befestigten Winkelschiene (15, 16) ist.

2. Maschinengehäuse nach Anspruch 1, dadurch gekennzeichnet, dass am Gestell (11, 13) zwei Rippen (17, 18) in senkrecht beabstandeten horizontalen Ebenen angeordnet sind, und dass übereinander angeordnete Klemmstücke (20) mit einem Steg (29) miteinander verbunden sind.

3. Maschinengehäuse nach Anspruch 2, dadurch gekennzeichnet, dass ein Wandteil (26) über ein Scharnier (28) mit einer Leiste (27) schwenkbar verbunden ist, die an einem Steg (29) befestigt ist.

4. Maschinengehäuse nach Anspruch 3, dadurch gekennzeichnet, dass die Leiste (27) mittels einer Deckleiste (30) an dem Steg (29) festgeklemmt ist.

5. Maschinengehäuse nach Anspruch 4, dadurch gekennzeichnet, dass jeweils zwei Leisten (27) mittels einer Deckleiste (30) an einem Steg (29) festgeklemmt sind.

6. Maschinengehäuse nach Anspruch 1, dadurch gekennzeichnet, dass Klemmstücke (20) Sicherheitsschalter (35) und/oder Schliesselemente (31, 33) tragen, mit denen an den Seitenteilen (26) befestigte Teile (32, 34) zusammenwirken.

7. Maschinengehäuse nach Anspruch 1, dadurch gekennzeichnet, dass Klemmstücke (20) Bedienelemente (40, 41) tragen, die durch Aussparungen (41) in den Wandteilen (25, 26) zugänglich sind.

## Revendications

1. Carter de machine comportant des portions de paroi (25, 26, 27) qui sont fixées à un bâti et qui sont maintenues, à l'aide d'agrafes en forme de U (20), à au moins une nervure horizontale (17, 18) du bâti (11, 13) au moyen d'une vis de blocage (22) qui s'appuie contra la nervure, caractérisé en ce que les portions de paroi (25, 26, 27) sont fixées de l'extérieur aux agrafes (20), en ce que les agrafes (20) présentent une rainure (20) qui loge la nervure (17, 18) et ne sont bridées que sur la nervure et en ce que la nervure (17, 18) est une partie d'un rail en équerre (15, 16) fixé au bâti (11, 13).

2. Carter de machine selon la revendication 1, caractérisé en ce que sur le bâti (11, 13), deux nervures (17, 18) sont disposées dans des plans horizontaux espacés verticalement l'un de l'autre et en ce que des agrafes (20) disposées l'une au-dessus de l'autre sont reliées l'une avec l'autre par une entretoise (29).

3. Carter de machine selon la revendication 2, caractérisé en ce qu'une portion de paroi (16) est reliée, avec possibilité de pivotement, par l'intermédiaire d'une charnière (28) qui présente une barre (27) fixée à une entretoise (29).

4. Carter de machine selon la revendication 3, caractérisé en ce que la barre (27) est fixée sur l'entretoise (29) au moyen d'une baguette de recouvrement (30).

5. Carter de machine selon la revendication 4, caractérisé en ce que chaque fois deux barres (27) sont fixées à une entretoise (29) au moyen d'une baguette de recouvrement (30).

6. Carter de machine selon la revendication 1, caractérisé en ce que des agrafes (20) portent des contacteurs de sécurité (35) et/ou des éléments de fermeture (31, 33) avec lesquels collaborent des pièces (32, 34) fixées sur les parties latérales (26).

7. Carter de machine selon la revendication 1, caractérisé en ce que des agrafes (20) portent des éléments de manœuvre (40, 41) qui sont accessibles par des évidements (41) dans les portions de paroi (25, 26).

## Claims

1. Machine housing with wall parts (25, 26, 27) which are fixed on a frame and, with the aid of U-shaped clamping pieces (20), are held on at least one horizontal rib (17, 18) on the frame (11, 13) by means of a clamping screw (22) pressing against the rib, characterized in that the wall parts (25, 26, 27) are fixed on the clamping pieces (20) from outside, that the clamping pieces (20) have a groove (21) accommodating the rib (17, 18) and are firmly clamped only on the rib, and that the rib (17, 18) is part of an angle rail (15, 16) fixed on the frame (11, 13).

2. Machine housing according to Claim 1, characterized in that two ribs (17, 18) are arranged on the frame (11, 13) in perpendicularly spaced horizon-al planes, and that clamping pieces (20) arranged one above the other are connected to one another by a web (29).

3. Machine housing according to Claim 2, characterized in that a wall part (26) is pivotably connected via a hinge (28) to a strip (27) which is fixed on a web (29).

4. Machine housing according to Claim 3, characterized in that the strip (27) is firmly clamped on the web (29) by means of a cover strip (30).

5. Machine housing according to Claim 4, characterized in that in each case two strips (27) are firmly clamped on a web (29) by means of a cover strip (30).

6. Machine housing according to Claim 1, characterized in that clamping pieces (20) bear safety switches (35) and/or closing elements (31, 33) with which parts (32, 34) interact which are fixed on the side parts (26).

7. Machine housing according to Claim 1, characterized in that clamping pieces (20) bear operating elements (40, 41) which are accessible through recesses (41) in the wall parts (25, 26).

FIG.1

FIG.2

FIG.3

FIG.4